# EUROPÄISCHE PATENTANMELDUNG

(11) **EP 1 329 400 A2**
(43) Veröffentlichungstag der Anmeldung: **23.07.2003**
(21) Anmeldenummer: 03000419.6
(22) Anmeldetag: 10.01.2003
(51) Int. Cl.: B65G 47/252, A01J 25/16

(54) **Wendestation für Transportbehälter**

(30) Priorität: 16.01.2002 DE 20200660 U
(71) Anmelder: GEBHARDT Transport- und Lagersysteme GmbH, 93413 Cham (DE)
(72) Erfinder: Janker, Rupert, 94372 Rattiszell (DE)
(74) Vertreter: Schieschke, Klaus, Dipl.-Ing.

(57) **Zusammenfassung**

Die Erfindung betrifft eine Wendestation für Transportbehälter, insbesondere Käsereifebehälter (1, 2), mit einer ersten und einer zweiten Transportvorrichtung (4, 5) zum Zu- bzw. Abführen der Behälter (1, 2) und mit einer dazwischen angeordneten Wendevorrichtung (14), wobei die Wendevorrichtung (14) als Wendetrommel (10) ausgebildet ist, in welcher ein von der ersten Transportvorrichtung (4) auf einem ersten Transportelement (20) zugeführter Behälter (2) um ein Wendemaß wendbar und nach dem Wendevorgang durch die zweite Transportvorrichtung (5) abführbar ist.

## Beschreibung

Die Erfindung bezieht sich auf eine Wendestation für Transportbehälter, insbesondere Käsereifebehälter, mit je einer ersten und einer zweiten Transportvorrichtung zum Zu- bzw. Abführen der Behälter und mit einer dazwischen angeordneten Wendevorrichtung.

Als Stand der Technik ist bereits eine Vorrichtung zum Auflegen bzw. Wenden von Käsen bekannt, welche auf mindestens einer Horde angeordnet sind (EP 0 651 941 A1). Diese bekannte Vorrichtung weist ausschwenkbare Elemente an Trägern auf, welche die auf der Horde befindlichen Käse abheben, entsprechend verlagern und um eine halbe Umdrehung drehen.

Demgegenüber besteht die Aufgabe der vorliegenden Erfindung darin, eine Wendestation der eingangs genannten Art zu schaffen, welche bei einfachem Aufbau der Gesamtanlage mit hoher Effektivität gefüllte Behälter, insbesondere Käsereifebehälter, um ein wählbares Maß wendet und abführt.

Diese Aufgabe wird erfindungsgemäß dadurch gelöst, dass eine Wendevorrichtung als Wendetrommel vorgesehen ist. In der Wendetrommel kann ein aufgegebener Behälter aus einer ersten Lage um ein Maß in eine zweite Lage gedreht und in dieser Lage wieder aus der Wendetrommel ausgegeben werden.

Der Wendevorgang ist vorteilhafterweise automatisch ausführbar, so dass für den Anlagenbetrieb im wesentlichen kein Personal erforderlich ist. Lediglich die Beschickung und die Entnahme der Käsereifebehälter kann durch entsprechende Transportvorrichtungen, beispielsweise durch Stapler erfolgen.

In einer vorteilhaften Ausführungsform der Erfindung wird der Behälter in der Wendetrommel beispielsweise hydraulisch oder pneumatisch fixiert, um eine sichere Handhabung zu gewährleisten und den Behälter während des Wendevorgangs in seiner Beweglichkeit einzuschränken. Auch diese Fixierung und die Freigabe des Behälters nach erfolgtem Wendevorgang kann besonders vorteilhaft automatisch ablaufen.

In einer vorteilhaften Ausführungsform ist die Wendestation so ausgebildet, dass eine Drehung des Behälters um 90°, 180° oder 270° um eine im wesentlichen horizontal angeordnete Achse erfolgen kann. Dadurch kann ein Behälter beispielsweise auf die Seite oder - besonders vorteilhaft - auf den Kopf gestellt und in dieser Lage aus der Wendetrommel wieder ausgegeben werden. Insbesondere liegt die gedachte Achse vorteilhafterweise parallel zur Bewegungsrichtung, entlang der der Behälter in die Wendetrommel eingebracht wird. Dann kann das Innere der Wendetrommel besonders einfach um den Behälter bzw. den Transportweg des Behälters von der ersten zur zweiten Transportvorrichtung angeordnet sein, ohne diesen zu blockieren bzw. zu behindern.

Ebenso ist aber auch die Bewegung des Behälters in eine beliebige andere Lage und dessen Ausgabe in dieser neuen Lage denkbar, wenn die Entnahme des Behälters in der gewünschten Lage durch eine entsprechend ausgeformte bzw. angeordnete zweite Transportvorrichtung vorgesehen ist. Hierfür wie auch für die besonders vorteilhafte Drehung um 180° ist die Bereitstellung geeigneter Transportelemente sinnvoll, wie sie im folgenden noch vorgestellt werden.

Die Behälter werden entlang der beiden Transportvorrichtungen und innerhalb der Wendetrommel vorteilhafterweise auf Transportelementen transportiert, auf denen die Behälter normalerweise einfach aufliegen. Dabei kann es sich insbesondere um Paletten handeln. In einer besonders vorteilhaften Ausführungsform ist in der Wendetrommel wenigstens ein zweites solches Transportelement bevorratet und für die Aufnahme des Behälters nach dem Wendevorgang vorgesehen. Im einfachsten Fall wird dieses Transportelement oberhalb des in die Wendetrommel einfahrenden Behälters gelagert. Bei einem Wendevorgang um 180° um eine horizontale Achse kommt dieses zweite Transportelement dann unter dem Behälter zu liegen, während das erste Transportelement nun oberhalb des Behälters angeordnet ist. Während das erste Transportelement dann in der Wendetrommel vorteilhafterweise als Vorrat für den nächsten zu wendenden Behälter gelagert wird, kann der bereits gewendete Behälter nunmehr auf dem "neuen" Transportelement aus der Wendetrommel auf die zweite Transportvorrichtung bewegt und schließlich aus der Wendestation ausgegeben werden.

Entsprechend ist natürlich auch die Bevorratung des Transportelements an einer anderen Position innerhalb der Wendetrommel denkbar, wenn der Wendevorgang um ein der Position entsprechendes anderes Winkelmaß erfolgen soll. Auch die Verwendung eines geeigneten Transportelements für die Aufnahme eines Behälters, der in eine beliebige Lage gewendet wurde, kann grundsätzlich in der Wendetrommel vorgesehen sein. Das in der Wendetrommel vorgesehene Transportelement kann dabei im einfachsten Fall dasjenige sein, welches beim vorausgehenden Wendevorgang als tragendes Transportelement für den Behälter diente und durch den Wendevorgang entlastet und vom Behälter entfernt wurde. Grundsätzlich ist aber auch die separate Zufuhr bzw. Abfuhr von Transportelementen in die Wendetrommel hinein bzw. aus ihr heraus denkbar.

Selbstverständlich können auch mehrere Transportelemente in der Wendetrommel gleichzeitig bevorratet und/oder für den Wendevorgang eingesetzt werden.

Besonders vorteilhaft ist die Wendetrommel so ausgeführt, dass die Transportelemente mit Klammervorrichtungen an einer oder mehreren geeigneten Halterungen lösbar fixiert werden können, wobei die Halterung entlang von Führungselementen innerhalb der Wendetrommel bewegt werden können. Die Klammervorrichtungen ermöglichen nach einer Ausrichtung der Transportelemente eine kraftübertragende Fixierung mit den Halterungen, während die Halterungen mit den Transportelementen entlang der Führungselemente auf gezielten Bahnen verfahrbar sind. Besonders vorteilhaft sind die Führungselemente so ausgebildet, dass durch das Verfahren die in der Wendetrommel angeordneten Transportelemente aufeinander zu bzw. voneinander weg bewegbar sind.

Bewegt sich nun ein in die Wendetrommel eingebrachtes und durch einen darauf liegenden Behälter belastetes Transportelement auf das oberhalb des Behälters angeordnete zweite Transportelement in der Wendetrommel zu, so kann der Behälter zwischen den beiden Transportelementen verklemmt bzw. arretiert werden. Eine solche Arretierung kann natürlich auch durch die ausschließliche Bewegung des zweiten Transportelements oder die gemeinsame Bewegung beider Transportelemente aufeinander zu erzielt werden.

Ein vertikal bewegbarer Niederdrücker kann vorteilhafterweise Anwendung finden, welcher gegebenenfalls die Behälter oder - bei teilweise oder ganz geöffneten Behältern deren Inhalt - vor dem Eintritt oder nach Verlassen der Wendetrommel hinunterdrückt, damit diese plan in dem Behälter bzw. auf dem unteren Transportelement liegen. Hierbei kann der Druck, mit dem der Niederdrücker arbeitet, variabel einstellbar sein.

Neben der vorzugsweisen Anwendung der Wendestation für Käsereifebehälter ist grundsätzlich auch der Einsatz für beliebige andere geeignete Behälter denkbar, die um ein gewünschtes Maß gedreht bzw. gewendet werden sollen.

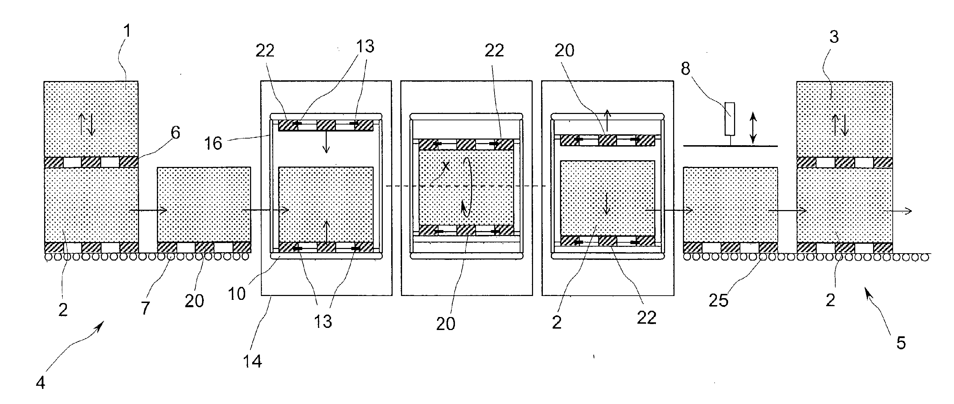

Die Erfindung wird nachfolgend anhand eines in der Zeichnung dargestellten Ausführungsbeispiels näher beschrieben. Die Zeichnung zeigt in schematischer Seitenansicht eine Wendestation für Käsereifebehälter gemäß der vorliegenden Erfindung.

Die erfindungsgemäße Wendestation für Behälter, insbesondere Käsereifebehälter, weist eine erste Transportvorrichtung 4 und eine zweite Transportvorrichtung 5 auf. Die erste Transportvorrichtung 4 dient zum Zuführen mindestens eines Käsereifebehälters 2, wohingegen die zweite Transportvorrichtung 5 den gewendeten Behälter 2 abführt. Zwischen der ersten Transportvorrichtung 4 und der zweiten Transportvorrichtung 5 befindet sich eine Wendevorrichtung 14, welche in Form einer Wendetrommel 10 ausgebildet ist.

Der Behälter 2 ist auf einem ersten Transportelement 20 gelagert, welches hier eine Palette ist. In der Wendetrommel 10 ist ein zweites Transportelement 22 angeordnet, welches eine mit dem ersten Transportelement 20 vergleichbare Palette ist. In der Wendetrommel 10 sind zwei Halterungen 12 vorgesehen. Eine Halterung 12 ist dabei so angeordnet, dass ein in die Wendetrommel 10 eingebrachter Behälter 2 mit seiner den Behälter tragenden Palette 20 auf dieser Halterung zu liegen kommt. Die zweite Halterung 12 ist der ersten Halterung 12 gegenüber so angeordnet und beabstandet, dass zwischen den beiden Halterungen der Behälter 20 angeordnet werden kann. Die beiden Halterungen 12 sind spiegelbildlich zu einer gedachten waagerechten Wendeachse x angeordnet.

Mit jeweils einer der beiden Halterungen 12 sind die Transportelemente 20 bzw. 22 über Klammervorrichtungen 13 fixierbar. Die Halterungen 12 sind darüber hinaus entlang von Führungsschienen 16 so verfahrbar, dass an den Halterungen fixierte Transportelement 20, 22 aufeinander zu- bzw. voneinander wegbewegt werden können.

Oberhalb der zweiten Transportvorrichtung 5 ist ein vertikal bewegbarer Niederdrücker 8 zur Beaufschlagung eines Behälters 1, 2 angeordnet, wobei der Druck, mit dem der Niederdrücker 8 arbeitet, vorteilhafterweise variabel einstellbar ist.

Die erfindungsgemäße Wendestation arbeitet wie folgt:
- Darstellung a:: Zwei Käsereifebehälter 1 und 2 werden beispielsweise per nicht näher dargestelltem Stapler längs zur Förderrichtung auf einer Rollenbahn, zweifach gestapelt aufgegeben. Der untere Behälter 2 wird mit seiner Palette 20 auf einer schematisch dargestellten Rollenbahn 7 abgesetzt. Der obere Behälter 1 wird über seine Palette 6 wieder abgehoben.
- Darstellung b:: Der untere Behälter 2 wird nach Lösung einer Arretierung über die Rollenbahn 7 in die Wendetrommel 10 gefördert. Der Behälter 1 aus Darstellung a kann dann unmittelbar auf die Rollenbahn 7 abgesetzt werden.
- Darstellung c1:: In der Wendetrommel 10 befindet sich die obere Palette 22, welche als Zielpalette bezeichnet wird. Die Palette 22 ist über eine Klammervorrichtung 13 an der oberen Halterung 12 fixiert.
Die erste Palette 20 wird in der Wendetrommel ausgerichtet und über eine Klammervorrichtung 13 an der unteren Halterung 12 fixiert.
- Darstellung c2:: Durch Bewegung der beiden Halterungen 12 aufeinander zu entlang der Führungsschienen 16 wird der Behälter 2 zwischen den beiden Halterungen eingeklemmt und arretiert. Durch einen Wendevorgang um 180° um die Achse x wird die Lage der beiden Transportelemente 20, 22 vertauscht und der Behälter 2 auf den Kopf gestellt.
- Darstellung c3:: Durch Bewegung der Halterungen 12 voneinander weg wird die Arretierung des Behälters 2 gelöst, so dass er nun auf der Palette 22 liegt. Die Halterungen werden dann in die Ausgangsstellung gemäß c1 gefahren und der gewendete Behälter 2 auf eine Rollenbahn 25 der Transportvorrichtung 5 ausgegeben.
Die Palette 20 wird in der Wendetrommel für den nächsten Behälter bevorratet.
- Darstellung d:: Der Niederdrücker 8 drückt den Behälter 2 bzw. seinen Inhalt mit einstellbarer Druckkraft gegen den Behälterboden bzw. die Palette 22.
- Darstellung e:: Durch Anheben eines bereits in der zweiten Transportvorrichtung 5 gelagerten weiteren Behälters 3 kann der Behälter 2 an die Position unterhalb dieses Behälters 3 gefahren werden, um dann gemeinsam mit dem Behälter 3 oder noch weiteren Behältern mit einem nicht näher dargestellten Transporter entnommen zu werden.

## Patentansprüche

1. Wendestation für Transportbehälter, insbesondere Käsereifebehälter (1, 2), mit einer ersten und einer zweiten Transportvorrichtung (4, 5) zum Zu- bzw. Abführen der Behälter (1, 2) und mit einer dazwischen angeordneten Wendevorrichtung (14),
**dadurch gekennzeichnet,**
**dass** die Wendevorrichtung (14) als Wendetrommel (10) ausgebildet ist, in welcher ein von der ersten Transportvorrichtung (4) auf einem ersten Transportelement (20) zugeführter Behälter (2) um ein Wendemaß wendbar und nach dem Wendevorgang durch die zweite Transportvorrichtung (5) abführbar ist.

2. Wendestation nach Anspruch 1, **dadurch gekennzeichnet, dass** der Behälter (2) in der Wendetrommel (10) zur Ausführung des Wendevorgangs arretierbar ist.

3. Wendestation nach Anspruch 1 oder 2, **dadurch gekennzeichnet, dass** der Wendevorgang um eine im wesentlichen horizontale Achse erfolgt und das Wendemaß 90°, 180° oder 270° beträgt.

4. Wendevorrichtung nach einem der vorigen Ansprüche, **dadurch gekennzeichnet, dass** in der Wendetrommel (10) wenigstens ein zweites Transportelement (22) gelagert ist, auf welchem der Behälter (2) nach dem Wendevorgang zu liegen kommt.

5. Wendestation nach einem der vorigen Ansprüche, **dadurch gekennzeichnet, dass** der in die Wendetrommel (10) eingebrachte Behälter (2) durch die Bewegung des ersten und des wenigstens zweiten Transportelements (20, 22) aufeinander zu zwischen diesen Transportelementen (20, 22) geklemmt und dadurch arretiert wird.

6. Wendestation nach einem der vorigen Ansprüche, **dadurch gekennzeichnet, dass** das erste und das wenigstens zweite Transportelement (20, 22) über Klammervorrichtungen (13) in der Wendetrommel (10) fixierbar ist und zum Arretieren des in der Wendetrommel (10) befindlichen Behälters (2) über Führungselemente (16) geführt wird.

7. Wendestation nach einem der vorigen Ansprüche, **dadurch gekennzeichnet, dass** nach dem Wenden der in der Wendetrommel (10') befindliche gewendete Behälter (2) auf dem zweiten Transportelement (22) über die zweite Transportvorrichtung (5) abführbar ist.

8. Wendestation nach einem der vorigen Ansprüche, **dadurch gekennzeichnet, dass** im Bereich der zweiten Transportvorrichtung (5) ein vertikal bewegbarer Niederdrücker (8) zur Beaufschlagung des Behälters (2) angeordnet ist.
